# EUROPEAN PATENT APPLICATION

(11) **EP 1 616 690 A1**
(43) Date of publication of application: **18.01.2006**
(21) Application number: 03815587.5
(22) Date of filing: 30.01.2003
(51) Int. Cl.: B29C 55/08

(54) **TENTER OVEN**

(71) Applicant: MITSUBISHI HEAVY INDUSTRIES, LTD., Tokyo 108-8215 (JP)
(72) Inventor: KOMETANI, Hideo, Mitsubishi Heavy Industries, Ltd., Nagoya-shi, Aichi 453-8515 (JP); KITADA, Takuya Mitsubishi Heavy Industries, Ltd., Nagoya-shi, Aichi 453-8515 (JP); SEKO, Tatsushi Mitsubishi Heavy Industries, Ltd., Nagoya-shi, Aichi 453-8515 (JP); KINOSHITA, Yusuke Mitsubishi Heavy Industries, Ltd, Nagoya-shi, Aichi 453-8515 (JP); HASEGAWA, Noritaka, CHURYO ENGINEERING CO., LTD., Nagoya-shi, Aichi 453-0862 (JP)
(74) Representative: Jorio, Paolo
(86) International application number: PCT/JP2003/000902
(87) International publication number: WO 2004/067265

(57) **Abstract**

A tenter oven has a heating zone in which plenum ducts (6) for heating a film (2) are provided; a cooling zone in which plenum ducts (7) for cooling the film (2) are provided; an intermediate chamber (4) defined between the heating zone and the cooling zone via partition walls (8, 9); and a tenter for stretching the film (2) which is transferred from the heating zone toward the cooling zone. In the intermediate chamber (4), an air injection nozzle is provided to inject fresh air onto the surface of the film (2) to form an air layer (10) traversing the surface of the film (2). Accompanying air flowing from the heating zone into the intermediate chamber (4) together with the film (2) is blocked by the air layer (10).

## Description

### Technical Field

The present invention relates to a tenter oven including plenum ducts for heating and cooling a film and a tenter for stretching the film.

### Background Art

A tenter oven has a heating zone provided with a plenum duct for heating a film, a cooling zone provided with a plenum duct for cooling the film, an intermediate chamber defined between the heating zone and the cooling zone with partition walls being provided therebetween, and a tenter for stretching the film transferred from the heating zone toward the cooling zone.

In this tenter oven, when a film is transferred from the heating zone to the intermediate chamber, accompanying air flows into the intermediate chamber. This accompanying air is polluted air containing additives such as a heat stabilizer (antioxidant), antistatic agent, and lubricant, which have bled from the film and vaporized. Conventionally, therefore, there arises a problem in that pollutants in the accompanying air flowing into the intermediate chamber adhere to the internal surface of partition wall etc. of the intermediate chamber.

Also, there arises a problem in that the accompanying air also flows into the cooling zone via the intermediate chamber, and the contained pollutants deposit on and adhere to the external surface etc. of the plenum duct provided in the cooling zone.

The present invention has been made in view of the above situation, and accordingly an object thereof is to provide a tenter oven capable of intercepting polluted accompanying air flowing from the heating zone into the intermediate chamber together with the film.

### Disclosure of the Invention

The present invention provides a tenter oven having a heating zone in which a plenum duct for heating a film is provided; a cooling zone in which a plenum duct for cooling the film is provided; an intermediate chamber defined between the heating zone and the cooling zone via partition walls; and a tenter for stretching the film which is transferred from the heating zone toward the cooling zone. In the intermediate chamber, an air injection nozzle is provided to inject fresh air onto the surface of the film to form an air layer traversing the surface of the film. Accompanying air flowing from the heating zone into the intermediate chamber together with the film is blocked by the air layer.

According to this tenter oven, accompanying air flowing from the heating zone into the intermediate chamber can be blocked by the air layer. Therefore, the pollutants such as additives contained in the accompanying air are prevented from adhering to the internal surface of the partition wall etc. of the intermediate chamber as dirt.

In an embodiment of the present invention, an exhaust air passage is provided between the air injection nozzle and the partition wall on the heat zone side. According to this configuration, the accompanying air blocked by the air layer can be exhausted through the exhaust air passage.

In the embodiment of the present invention, the air injection nozzle is provided inclinedly so that the fresh air is injected in the direction of resisting the flow of the accompanying air. According to this configuration, the air layer shows a very high blocking effect against the accompanying air.

In the embodiment of the present invention, purifying means for purifying air exhausted from the exhaust air passage is provided so that fresh air exhausted from the purifying means is supplied to the air injection nozzle. According to this configuration, fresh air can be obtained by utilizing air exhausted from the exhaust air passage.

In the embodiment of the present invention, temperature controlling means is provided to control the temperature of the fresh air. According to this configuration, by appropriately setting the temperature of fresh air by this temperature controlling means, any effect on the temperature of the heating zone by the temperature of the air injected from the nozzle can be restrained as far as possible.

In the embodiment of the present invention, an exhaust air passage is added between the air layer and the partition wall on the cooling zone side in the intermediate chamber. According to this configuration, air can be exhausted on the downstream side of the air layer.

In the embodiment of the present invention, heating means is provided in the intermediate chamber to prevent dew condensation. According to this configuration, dew condensation in the intermediate chamber can be prevented.

### Brief Description of the Drawings

FIG. 1 is a schematic plan view of a tenter for a tenter oven; and
FIG. 2 is a schematic longitudinal sectional view showing an embodiment of a tenter oven in accordance with the present invention.

### Best Mode for Carrying out the Invention

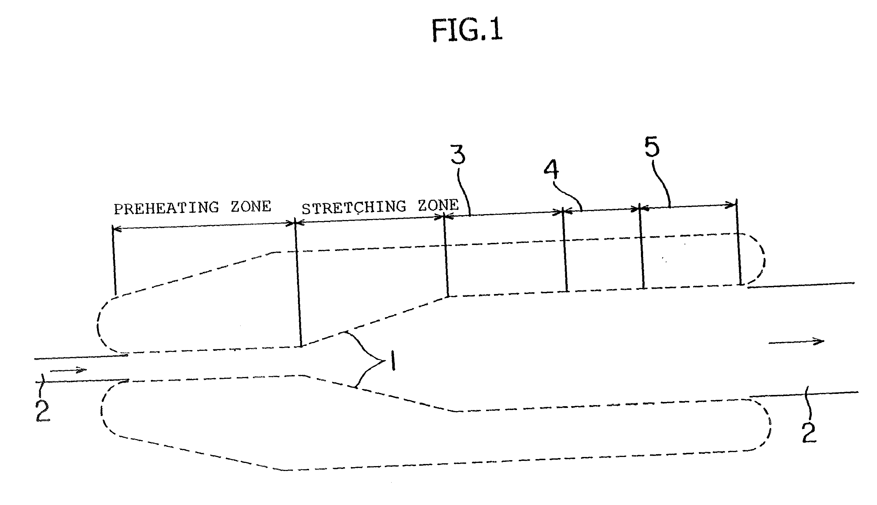

FIG. 1 schematically shows a configuration of a biaxially stretching tenter in accordance with the present invention.

In FIG. 1, a pair of guide rails 1 of an endless structure for guiding a film clip group, not shown, are provided symmetrically with respect to the centerline of a running passage for a plastic film 2 running horizontally.

This tenter is provided with a preheating zone, a stretching zone, a heat setting chamber (annealing chamber) 3, an intermediate chamber 4, and a cooling chamber 5 in that order from the upstream side of the running path for the film 2 to the downstream side thereof.

In the preheating zone, a film clip that clips the supplied film 2 runs at a low speed. The film 2 is preheated by hot air blown off from a plurality of plenum ducts, not shown, during running.

In the stretching zone, since the guide rails 1 expand with respect to each other toward the downstream side, a clearance between the film clip on one guide rail 1 side and the film clip on the other guide rail 1 side is expanded gradually. At the same time, in the stretching zone, the film 2 is heated by hot air blown off from a plurality of plenum ducts, not shown.

As a result, the film 2 having been preheated in the preheating zone is stretched in the transverse direction in the stretching zone.

In the heat setting chamber 3, the film 2 having been stretched in the stretching zone is subjected to heat treatment (annealing) in a high-speed transfer state. The heat treatment in the heat setting chamber 3 is carried out by utilizing hot air blown off from a plurality of plenum ducts, not shown.

In the cooling chamber 5, the film 2 having passed through the intermediate chamber 4 is cooled by cold air blown off from plenum ducts, not shown. The preheating zone, the stretching zone, and the heat setting chamber 3 constitute a heating zone, and also the cooling chamber 5 constitutes a cooling zone.

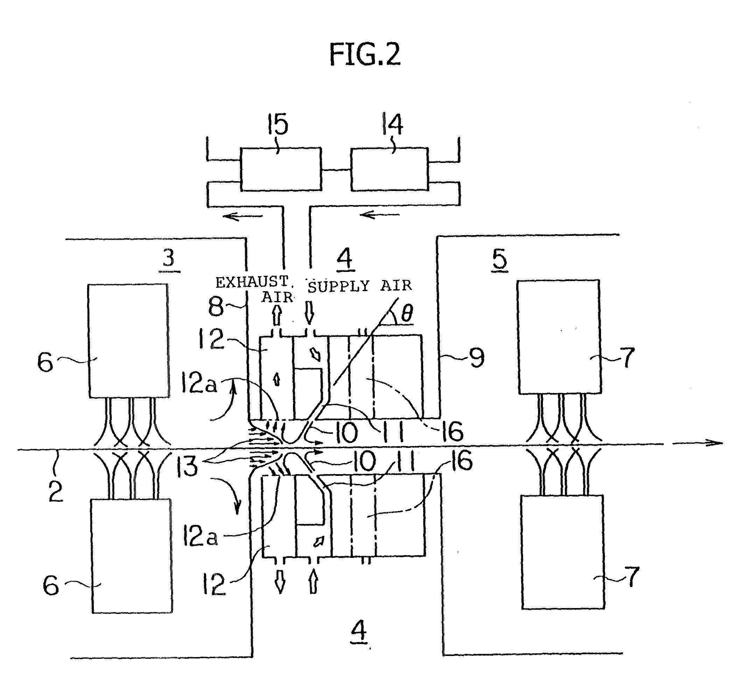

FIG. 2 is a schematic longitudinal sectional view showing part of a heat setting chamber 3, an intermediate chamber 4, and part of a cooling chamber 5.

As shown in FIG. 2, the heat setting chamber 3, the intermediate chamber 4, and the cooling chamber 5 are disposed symmetrically above and below a film 2. The heat setting chamber 3 is provided with a plenum duct 6 for blowing hot air for annealing on the film 2, and the cooling chamber 5 is provided with a plenum duct 7 for blowing cold air on the film 2.

The intermediate chamber 4 is defined by a partition wall 8 provided at the boundary between the heat setting chamber 3 and the intermediate chamber 4 and a partition wall 9 provided at the boundary between the intermediate chamber 4 and the cooling chamber 5. In the intermediate chamber 4, an air injection nozzle 11 is provided to form an air layer 10 traversing the surface of the film 2 by injecting fresh air toward the surface of the film 2. Also, an exhaust air passage 12 is provided between the air injection nozzle 11 and the partition wall 8.

The air injection nozzle 11 is inclined so that the tip end thereof is close to the exhaust air passage 12. The inclination angle θ of this nozzle 11 is set at a value between 40° and 80°. In this embodiment, it is set at about 60°. The exhaust air passage 12 is provided with a perforated plate 12a at the inlet thereof.

In the tenter oven in accordance with this embodiment, fresh air the temperature of which has been controlled to, for example, about 100°C by a temperature controller 14 is injected from the nozzle 11. As a result, the air layer (air curtain) 10 is formed in the direction in which the surface of the film 2 is traversed (the direction perpendicular to the paper surface of FIG. 2).

When the film 2 is transferred from heat setting chamber 3 into the intermediate chamber 4, air 13 accompanying the film 2 flows into the intermediate chamber 4 through a gap formed by the lower end of the partitioning wall 8 and the surface of the film 2. This accompanying air 13 is blocked by the air layer 10 as shown in FIG. 2.

As described above, the nozzle 11 has an inclination of angle θ, so that from the nozzle 11, fresh air is injected in the direction of resisting the flow of the accompanying air 13. Therefore, the air layer 10 formed by this injected air shows a very high blocking effect against the accompanying air 13.

The accompanying air 13 is polluted air containing additives such as a heat stabilizer (antioxidant), antistatic agent, and lubricant, which have bled from the film and vaporized.

The accompanying air 13 having been blocked by the air layer 10 and the air having been injected from the nozzle 11 are sucked into a purifier 15 after passing through the perforated plate 12a and the exhaust air passage 12. The purifier 15 removes the pollutants such as additives contained in the sucked air by means such as filtration, and supplies the fresh air obtained thereby to the temperature controller 14. Therefore, the nozzle 11, the exhaust air passage 12, the purifier 15, and the temperature controller 14 constitute an air circulation system.

As described above, according to the tenter oven in accordance with this embodiment, the accompanying air 13 coming from the heat setting chamber 3 is blocked by the air layer 10, and some of the blocked accompanying air is exhausted through the exhaust air passage 12. Therefore, the pollutants such as additives contained in the accompanying air 13 are prevented from adhering to the internal surface of partition wall etc. of the intermediate chamber 4 as dirt.

Also, the air layer 10 resultantly blocks the flow of the accompanying air 13 into the cooling chamber 5. Therefore, the pollutants contained in the accompanying air 13 are also prevented from depositing on and adhering to the external surface etc. of the plenum duct 7 provided in the cooling chamber 5. The prevention of the high-temperature accompanying air 13 flowing into the cooling chamber 5 is effective in improving the cooling efficiency of the film 2 in the cooling chamber.

Some of fresh air blown on the surface of the film 2 also flows toward the partition wall 9 along the surface of the film 2. Also, in the case where the feed speed of the film 2 is very high, the accompanying air 13 may leak from the air layer 10 though the quantity of leaking air is small.

Thereupon, it is preferable that, as indicated by a dashed line in FIG. 2, exhaust air passages 16 be provided between the air layers 10 and the partition wall 9 so that some of the fresh air and the leaking accompanying air are exhausted through the exhaust air passages 16. Needless to say, the air exhausted through the exhaust air passages 16 can be sucked into the purifier 15.

The accompanying air 13 exhausted from the intermediate chamber 4 sometimes condenses due to a decrease in temperature in the intermediate chamber 4. Therefore, in this embodiment, heating means such as an electric heater, not shown, is provided at places at which the dew condensation is liable to occur, such as the internal surfaces of the partition walls 8 and 9 and the internal surfaces of wall portions forming the exhaust air passages 12 and 16 to prevent the dew condensation by the heat generation of the heating means.

### Industrial Applicability

In the tenter oven in accordance with the present invention, the accompanying air flowing from the heating zone into the intermediate chamber together with the film can be blocked. Therefore, the tenter oven is effective in preventing the pollutants such as additives contained in the accompanying air from adhering to the internal surface of partition wall etc. of the intermediate chamber as dirt.

## Claims

1. A tenter oven having:
a heating zone in which a plenum duct for heating a film is provided;
a cooling zone in which a plenum duct for cooling said film is provided;
an intermediate chamber defined between said heating zone and said cooling zone via partition walls;
a tenter for stretching said film which is transferred from said heating zone toward said cooling zone; and
an air injection nozzle which is provided in said intermediate chamber and injects fresh air onto the surface of said film to form an air layer traversing the surface of said film, wherein
accompanying air flowing from said heating zone into said intermediate chamber together with said film is blocked by said air layer.

2. The tenter oven according to claim 1, wherein an exhaust air passage is provided between said air injection nozzle and said partition wall on the heating zone side.

3. The tenter oven according to claim 1 or 2, wherein said air injection nozzle is provided inclinedly so that said fresh air is injected in the direction of resisting the flow of said accompanying air.

4. The tenter oven according to claim 2, wherein purifying means for purifying air exhausted from said exhaust air passage is provided so that fresh air exhausted from said purifying means is supplied to said air injection nozzle.

5. The tenter oven according to claim 1, wherein temperature controlling means is provided to control the temperature of said fresh air.

6. The tenter oven according to claim 1, wherein an exhaust air passage is added between said air layer and said partition wall on the cooling zone side in said intermediate chamber.

7. The tenter oven according to claim 1, wherein heating means is provided in said intermediate chamber to prevent dew condensation.
